# EUROPÄISCHE PATENTSCHRIFT

(11) **EP 1 876 057 B1**
(45) Veröffentlichungstag und Bekanntmachung des Hinweises auf die Patenterteilung: **29.02.2012**
(21) Anmeldenummer: 07020769.1
(22) Anmeldetag: 20.09.2005
(51) Int. Cl.: B60R 7/00

(54) **Kraftfahrzeug mit mehreren Unterbringungsorten für Modulboxen**
Vehicle with multiple stowing places for module boxes
Véhicule avec des espaces de rangement multiples pour des éléments modulaires

(30) Priorität: 30.09.2004 DE 102004047554
(43) Veröffentlichungstag der Anmeldung: 09.01.2008
(62) Teilanmeldung aus: 05020418.9
(73) Patentinhaber: BOS GmbH & Co. KG, 73760 Ostfildern (DE)
(72) Erfinder: Sitzler, Wolfgang, 42111 Wuppertal (DE); Bohlke, Hartmut, 42369 Wuppertal (DE)
(74) Vertreter: Rüger, Barthelt & Abel

(56) Entgegenhaltungen:
- EP-A- 1 642 777
- DE-A1- 10 132 081
- DE-A1- 19 924 921
- US-B1- 6 199 948

## Beschreibung

Üblicherweise bieten die Automobilhersteller heute als Sonderzubehör Durchladesysteme an, um die Skier innerhalb des Kraftfahrzeugs unterzubringen. Dazu wird ein Skisack verwendet, in dem die Skier mit jenem Ende stecken, das sich im Ladezustand im Fahrgastraum des Kraftfahrzeugs befindet. Bei Nichtgebrauch wird der Skisack in einer Modulbox verstaut, die herausnehmbar in einer entsprechenden Fassungsanordnung in der Mitte der Rücksitzlehne eingesetzt ist.

Abgesehen hiervon ist es ferner bekannt, an Stelle der Modulbox mit Skisack dort eine Box unterzubringen, die ausschließlich als Staufach dient und in keiner Weise speziell zugerichtet ist.

Als weitere Alternative werden Modulboxen angeboten, in denen sich sogenannte Cupholder befinden, d.h. ringförmige Anordnungen, in denen kippsicher Getränkebecher gehalten werden können.

Die WO 02/02372 A1 beschreibt einen Kombi-PKW mit einem Lade- oder Kofferraum. Der Lade- oder Kofferraum wird seitlich von Karosserieteilen begrenzt, die sich unterhalb der hinteren Seitenfenster erstrecken. Als Auskleidung für die Seitenwände des Kofferraums sind speziell angepasste Behälter vorgesehen, die in entsprechende Nischen an der Kofferraumseitenwand eingestellt werden können. Diese Koffer oder Behälter sind gegeneinander austauschbar. Spezielle Fassungsanordnungen zum Halten der Koffer oder Behälter sind in der Druckschrift nicht erläutert.

Aus der US 6,199,948 B1 ist es bekannt, entweder in der Rückseite der Rücksitzlehne eines Sitzes oder in der Sitzfläche beispielsweise der Rücksitzbank eine Fassungsanordnung vorzusehen, in der ein Behälter unterzubringen ist.

Ausgehend hiervon ist es Aufgabe der Erfindung eine verbesserte Verstaumöglichkeit für Behälter im Kraftfahrzeug zu schaffen.

Diese Aufgabe wird erfindungsgemäß mit dem Kraftfahrzeug mit den Merkmalen des Anspruches 1 gelöst.

Das neue Kraftfahrzeug weist eine Karosserie mit einer Innenverkleidung auf sowie Sitze für Personen. Innerhalb des Kraftfahrzeugs befindet sich wenigstens eine erste Fassungsanordnung, die eine Schnittstelle zur Aufnahme und Halterung eines Funktionseinsatzes, beispielsweise einer Funktionsbox, aufweist. Die Fassungsanordnung verfügt ferner über einen Aufnahmeraum, der einen Funktionseinsatz, beispielsweise in Gestalt der Funktionsbox, aufnehmen kann sowie eine rechteckige Einstecköffnung, über die der Funktionseinsatz in die Fassungsanordnung einsteckbar ist.

An einer anderen Stelle innerhalb des Kraftfahrzeugs ist wenigstens eine zweite Fassungsanordnung vorgesehen, die ebenfalls eine Schnittstelle zur Aufnahme und Halterung eines Funktionseinsatzes sowie einen zugehörigen Aufnahmeraum aufweist. Auch hier ist die Einstecköffnung rechteckig.

Die Schnittstelle der beiden Fassungsanordnungen sind zumindest insoweit übereinstimmend, dass ein und derselbe Funktionseinsatz wahlweise in der einen oder der anderen Fassungsanordnung untergebracht werden kann.

Dabei wird unter Schnittstelle die Kombination aller jener hardwaremäßigen Merkmale verstanden, die erforderlich sind, um den Funktionseinsatz aufzunehmen und eine Halterung zu ermöglichen. Dies bedeutet keineswegs, dass die beiden Fassungsanordnungen hinsichtlich dieser Schnittstelle völlig identisch sein müssen. Es genügt, wenn beispielsweise in einer Fassungsanordnung lediglich ein Parken eines Funktionseinsatzes möglich ist, ohne dass dieser seine Funktion auch nur zum Teil zu entfalten braucht. Dies bedeutet beispielsweise, dass die Verriegelungseinrichtungen zum herausfallsicheren Halten des Funktionseinsatzes keineswegs in beiden Fassungseinsätzen übereinzustimmen brauchen.

Eine maximale Ausnutzung des Aufnahmeraums der Fassungsanordnung ist möglich, wenn die lichte Weite des Aufnahmeraums im Wesentlichen mit der lichten Weite der Einstecköffnung übereinstimmt.

Bei der Fassungsanordnung kann, je nach Ort, der Aufnahmeraum an der Rückseite, d.h. der der Einstecköffnung gegenüberliegenden Seite, geschlossen sein. Dies ergibt sich u.U. zwangsläufig aufgrund der Unterbringung innerhalb des Fahrzeugs, weil sich unmittelbar hinter der Fassungsanordnung irgendwelche Karosseriewände befinden. Es besteht aber auch die Möglichkeit, die entsprechende Wand unmittelbar an der Fassungsanordnung vorzusehen.

Solche geschlossenen Anordnungen bieten sich insbesondere für jene Fassungsanordnungen an, in denen die Funktionseinsätze bei Nichtgebrauch geparkt werden. In diesem Falle ist kein in das Karosserieinnere oder sonstige Funktionsteile führende unverschlossene Öffnung vorhanden, selbst dann, wenn der Funktionseinsatz, beispielsweise die Funktionsbox oder Modulbox entnommen ist.

Hingegen ist es beispielsweise für eine Fassungsanordnung im Bereich der Rücksitzlehne zweckmäßig, wenn die Fassungsanordnung, auf der der Einstecköffnung gegenüberliegenden Seite offen ist, um die Durchlademöglichkeit zu schaffen. Auch hier entspricht zweckmäßigerweise die lichte Weite, zumindest angenähert, der lichten Weite des Aufnahmeraums.

Je nach Verwendungszweck und Parkposition können die Fassungsanordnungen in der Rücksitzlehne, in der Rückseite der Rückenlehnen von Vordersitzen, im Dachhimmel, im Boden des Koffer- oder Laderaums oder auch in den Seitenwänden des Koffer- oder Laderaums vorhanden sein. Eine Unterbringung in der Rücksitzlehne, und zwar unmittelbar hinter einem der Sitze und nicht, wie bei der Durchlademöglichkeit in der Mitte, ist ebenfalls vorstellbar.

Soweit in der Modulbox elektrische Geräte enthalten sind, ist es zweckmäßig, wenn die Fassungsanordnung mit einem entsprechenden Kontaktsatz oder elektrischen Kontaktstellen versehen ist.

Um ein einfacheres Einstecken des Funktionseinsatzes zu ermöglichen, umfasst der Funktionseinsatz und die Fassungsanordnung Schwenkmittel, die ein Schwenken des Funktionseinsatzes beim Einstecken und herausnehmen ermöglichen. Solche Schwenkmittel können in einfachster Form in Verriegelungsleisten bestehen, die an der Unterseite des Funktionseinsatzes oder dem unteren Rand des Aufnahmeraums vorgesehen sind.

Ferner können Anschläge vorhanden sein, die ein zu tiefes Einstecken in die Fassungsanordnung verhindern und damit ein leichtes Auffinden der Verriegelungsposition ermöglichen.

Weiterhin können der Funktionseinsatz und die Fassungsanordnung mit Verriegelungsmitteln versehen sein, um den Funktionseinsatz in der Fassungsanordnung so zu sichern, dass er bei den normalerweise auftretenden Beschleunigungskräften nicht aus der Fassungsanordnung herausfällt.

Mögliche Funktionseinsätze sind eine Funktionsbox, beispielsweise in Gestalt eines leeren Kastens, der ein Staufach bildet, eines Gehäuses, in dem ein Skisack untergebracht ist, oder einem Gehäuse, das im aufgeklappten Zustand Cupholder bereitstellt.

Im Übrigen sind Weiterbildungen der Erfindung Gegenstand von Unteransprüchen.

Beim Studium der Figurenbeschreibung wird klar, dass eine Reihe von Abwandlungen möglich sind, die sich dem Fachmann aufgrund der jeweiligen Randbedingungen, beispielsweise der Einbaupositionen und der sonstigen Anforderungen wie Crashsicherheit und dergleichen von selbst ergeben.

In der Zeichnung sind Ausführungsbeispiele des Gegenstandes der Erfindung dargestellt. Es zeigen:
- Fig. 1: den hinteren Teil des Fahrgastraums eines Pkw, in einer teilweise aufgeschnittenen, vereinfachten perspektivischen Darstellung;
- Fig. 2: die Fassungsanordnung für einen Funktionseinsatz, in einer geschnittenen perspektivischen Darstellung;
- Fig. 3: einen Funktionseinsatz in einer perspektivischen Ansicht auf die Vorderseite;
- Fig. 4: den Funktionseinsatz nach Fig. 3 in einer Seitenansicht;
- Fig. 5: die aufgeschnittene Heckpartie des Pkw nach Fig. 1, in einer perspektivischen Darstellung unter Veranschaulichung weiterer Orte zur Unterbringung der Fassungsanordnung und
- Fig. 6: die Rückseite der Vordersitze mit darin vorgesehenen Fassungsanordnungen, in einer perspektivischen Darstellung.

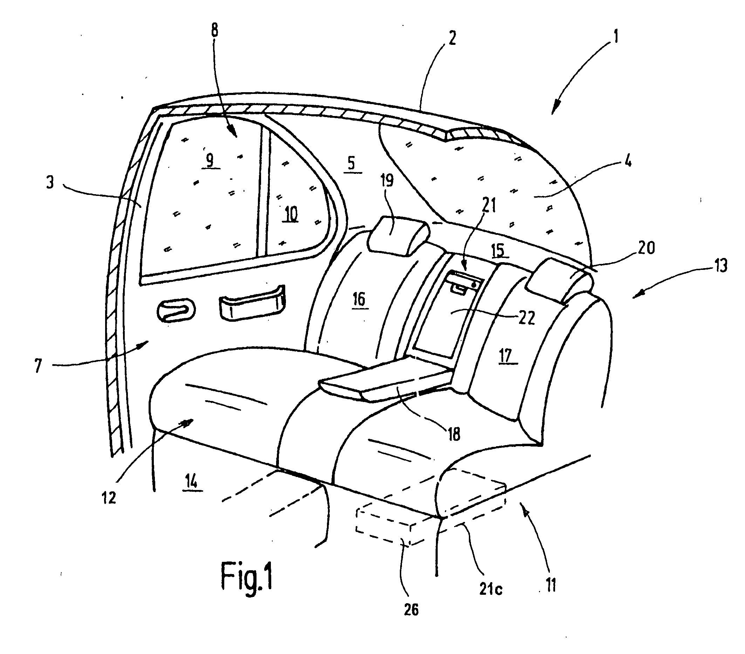

Fig. 1 stellt den aufgebrochenen abgeschnittenen Funkbereich eines Pkw dar. Die Figur veranschaulicht einen Blick auf die rechte Innenseite, die zu der nicht gezeigten linken Innenseite spiegelbildlich ist. Die Darstellung ist vereinfacht. So sind beispielsweise Karosserieinnenstrukturen wie Versteifungen und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach oben zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine nicht weiter zu erkennende Innenverkleidung.

Zwischen der B-Säule 3 und der C-Säule 5 ist an der B-Säule 3 eine hintere rechte Seitentür 7 in bekannter Weise anscharniert. Die Seitentür 7 enthält in bekannter Weise ein Fenster 8, das sich in einen versenkbaren Abschnitt 9 und einen dreieckförmigen starren Abschnitt 10 aufteilt.

Auf der Höhe der hinteren rechten Seitentür 7 befindet sich eine Rücksitzbank 11, zu der eine Sitzfläche 12 sowie eine Rücksitzlehne 13 gehören. Die Sitzfläche 12 liegt auf einer Sockelfläche 14, die zu der Bodengruppe gehört und in der Fußräume ausgebildet sind.

Knapp unterhalb der Oberkante der Rücksitzlehne 13 befindet sich eine Hutablage 15, die sich zu der Unterkante der Heckscheibe 4 erstreckt.

Die Rücksitzlehne 13 gliedert sich in einen rechten Rückenlehnenabschnitt 16 sowie einen linken Rückenlehnenabschnitt 17, die voneinander, wie gezeigt, ein Stück weit beabstandet sind. In diesem Zwischenraum befindet sich ein Rückenlehnenabschnitt 18, der an seiner Unterkante anscharniert ist und aus der gezeigten liegenden Stellung in eine hochgeklappte Stellung geführt werden kann, in der die beiden Rückenlehnenabschnitte 16, 17 miteinander verbindet, um so einen dritten Notsitz zu schaffen. An der Oberkante der Rückenlehnenabschnitte 16 und 17 befinden sich Kopfstützen 19 und 20.

In dem normalerweise durch den mittigen Rückenlehnenabschnitt 18 verdeckten Bereich befindet sich eine Fassungsanordnung 21, in die eine Funktionsbox 22 eingesetzt ist. Die Fassungsanordnung 21 ist karosseriefest, beispielsweise in der Struktur für den rechten Rückenlehnenabschnitt 16 untergebracht, wie dies heute bei Kraftfahrzeugen üblich ist.

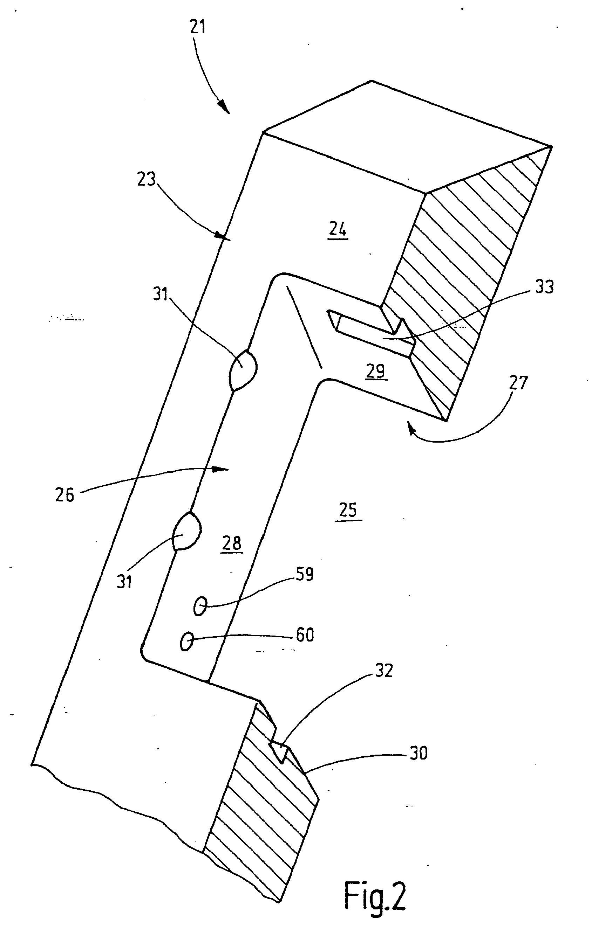

Die Fassungsanordnung 21 zur Aufnahme und Halterung der Funktionsbox 22 ist in Fig. 2 geschnitten perspektivisch veranschaulicht. Zu ihr gehört ein Grundkörper 23 mit einer ebenen Vorderseite 24, der an der Tragstruktur für das rechte Rücklehnenpolster 16 befestigt ist oder auch Bestandteil von diesem sein kann.

In dem Grundkörper 23 befindet sich ein Aufnahmeraum 25, der über eine Einstecköffnung 26 von der Vorderseite 24 her zugänglich ist. Der Aufnahmeraum 25 ist als durchgehende Öffnung ausgebildet, wodurch an der Rückseite eine weitere Öffnung 27 entsteht, die etwa dieselbe Konfiguration, wie die Einstecköffnung 26 an der Vorderseite 24 hat. Die Einstecköffnung 26 ist rechteckig, ebenso wie die Öffnung 27 an der Rückseite.

Der Aufnahmeraum 25 wird zwischen der Einstecköffnung 26 und der rückseitigen Öffnung 27 von zwei zueinander parallelen Seitenwänden 28 begrenzt, von denen wegen der aufgeschnittenen Darstellung lediglich die eine Seitenwand zu erkennen ist. Die beiden Seitenwände 28 werden durch eine obere Seitenwand 29 sowie eine untere Seitenwand 30 miteinander verbunden. Die Innenecken an denen die Wände 28, 29, 30 ineinander übergehen, sind ausgerundet.

Um das Einschwenken und Herausnehmen zu erleichtern, verlaufen die zueinander parallelen Wände 28 und 29 so, dass ihre Projektion auf die Seitenwand 27 mit dem betreffenden Rand der Einstecköffnung 25 und dem Rand der hinteren Öffnung 24 ein Parallelogramm definieren. Sie laufen somit unter einem von 90° verschiedenen Winkel gegenüber einer planen Frontfläche 24 des Grundkörpers 23. Im eingebauten Zustand fällt die untere Fläche 29, ausgehend vom Innenraum des Pkw's, in Richtung auf das Heck nach unten ab.

Der Aufnahmeraum 25 hat somit die Gestalt eines geraden Prismas, dessen Grundfläche ein längliches Parallelogramm ist.

Die Tiefe des Aufnahmeraums 25 ergibt sich aus den jeweiligen Randbedingungen, beispielsweise dem tiefsten, bündig einzusetzenden Funktionseinsatz oder der tiefsten, bündig einzusetzenden Modulbox.

Um ein Hindurchfallen des Funktionseinsatzes 22 zu verhindern, enthalten die Ränder der Einstecköffnung 26 im Bereich der Seitenflächen 28 Ausnehmungen 31, die die Gestalt eines Segmentes eines Paraboloids haben. Auf jeder Seite der Einstecköffnung 26 sind zwei derartige Ausnehmungen 31 vorhanden, wobei diese Ausnehmungen 31 zu beiden Seiten der Einstecköffnung 26 jeweils auf gleicher Höhe liegen.

In der unteren Fläche 30 ist eine Haltenut 32 vorgesehen. Eine weitere Nut 33 befindet sich in der oberen Fläche 29 und dient als Rastmittel.

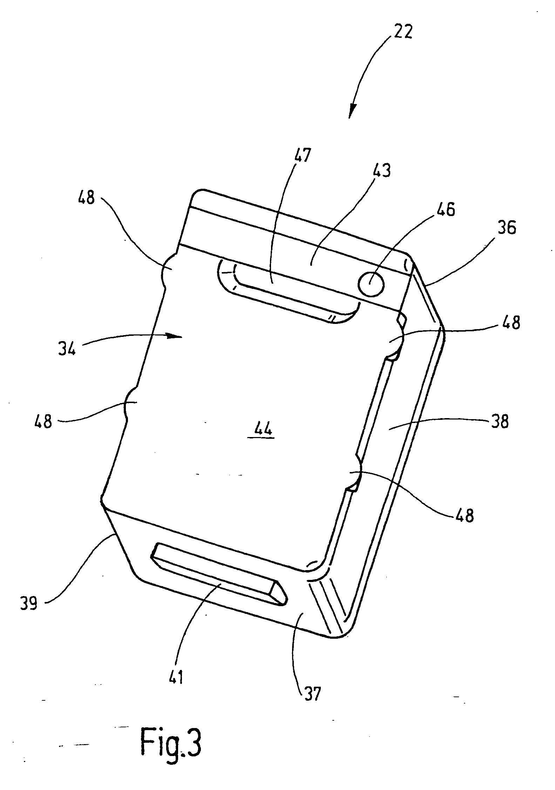

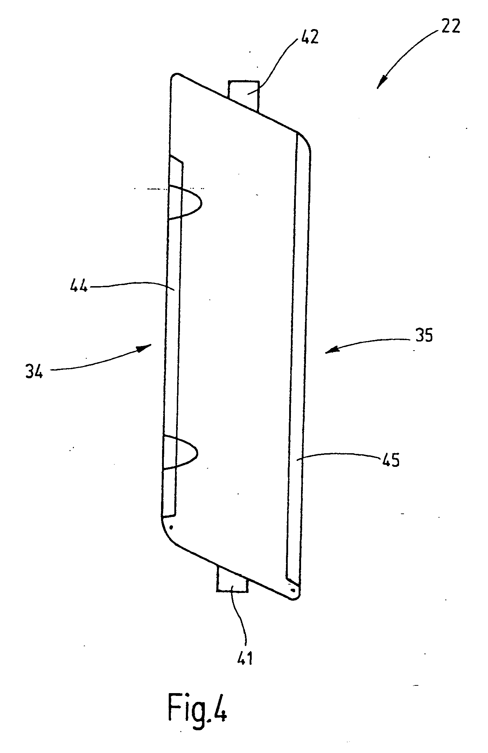

Die Figuren 3 und 4 zeigen in einer perspektivischen Darstellung und in einer Seitenansicht einen Funktionseinsatz 22 in Gestalt einer Modulbox, in deren Innerem beispielsweise zusammengefaltet ein Skisack liegt. Die Modulbox 22 ist ein Parallelepiped, das von einer Vorderseite 34, einer Rückseite 35, einer oberen und einer unteren Schmalseite 36 und 37 sowie zwei seitlichen Schmalseiten 38 und 39 begrenzt ist. Die beiden Schmalseiten 38 und 39 sind zueinander parallel, ebenso wie die Schmalseiten 36 und 37. Auch die Vorderseite 34 ist parallel zu der Rückseite 35.

Die Abstände der Schmalseiten 36, 37, 38, 39 und ihre Winkel zueinander sind so bemessen, dass der Funktionseinsatz 22 ohne weiteres in dem Aufnahmeraum 25 Platz finden kann.

An der Unterseite und somit an der unteren Schmalseite 37, steht eine Leiste 41 vor, die mit der Nut 32 zusammenwirkt. In der oberen Schmalseite 36 steckt beweglich eine Rastklinke 42, die hinter die Kontur, die durch die Oberschmalseite 36 definiert ist, zurückgezogen werden kann. Zur Betätigung der Rast- oder Verriegelungsklinke 42 ist eine Griffleiste 43 vorgesehen, die sich in der Vorderfläche 34 an der oberen Kante befindet. Die Griffleiste 43 ist in bekannter Weise um eine Horizontalachse schwenkbar. Der Mechanismus, der dazu dient die Bewegung der Griffleiste 43 auf die Rastklinke 42 zu übertragen, ist bekannt und braucht deswegen an dieser Stelle nicht erläutert zu werden, zumal er nicht Gegenstand der Erfindung ist.

An der Vorderseite 34 ist ferner ein Deckel 44 anscharniert, der um eine horizontale Achse im Bereich der unteren Schmalseite 37 schwenkbar ist. Der Deckel 44 reicht von der unteren Schmalseite 37 bis zu der Unterkante der Griffleiste 43. Ein weiterer Deckel in Gestalt eines Rückdeckels 45 ist an der Rückseite 35 vorhanden und ebenfalls um eine unten liegende Horizontalachse parallel zu der Schwenkachse des vorderen Deckels schwenkbar. Die beiden Deckel 44 und 45 werden durch einen an sich bekannte Klinkenmechanismen in der geschlossenen Stellung gehalten. Die Verriegelung geschieht durch eine Drucktaste 46, die in einer Bohrung der Griffleiste 43 sitzt.

Der Mechanismus zum Ver- und Entriegeln der beiden Deckel 44 und 45 ist bekannt und braucht deswegen im Einzelnen nicht erläutert zu werden.

Der Deckel 44 sowie die Griffleiste 43 und die Drucktaste 46 definieren eine im Wesentlichen plane Ebene, die lediglich von einer Griffmulde 47 unterbrochen ist, die sich im Bereich der Unterkante der Griffleiste 43 befindet und in dem vorderen Deckel 44 ausgebildet ist.

Damit die Modulbox 22 beim Einstecken zwanglos die richtige Position erreicht, ist sie an der Seite mit paraboloidförmigen Ausbuchtungen 48 versehen, die zu den Ausnehmungen 31 komplementär sind. Die Ausbuchtungen 48 befinden sich zum Teil an der Seite des vorderen Deckels 44 und zum Teil im Bereich der langen Schmalseiten 38 und 39.

Um die Modulbox 22 in die Fassungsanordnung 21 einzusetzen und zu halten, wird sie mit der unteren Schmalseite 37 voraus durch die Einstecköffnung 26 in den Aufnahmeraum 25 eingeführt. Dabei verhindern die der unteren Schmalseite 37 benachbarten Ausbuchtungen 48, dass die Modulbox 22 zu tief durch den Aufnahmeraum 25 durchgesteckt werden kann. Die Anordnung ist so getroffen, dass die Ausbuchtungen 48 zwanglos in die unteren Ausnehmungen 31 hineinfinden, wenn die Kante, an der die Vorderseite 44 in die untere Schmalfläche 37 übergeht, auf der unteren Fläche 30 des Aufnahmeraums 25 aufsteht.

Die insoweit eingesteckte Modulbox 22 kann nunmehr vollständig eingerastet werden, indem sie geschwenkt wird, wobei die unteren Ausbuchtungen 48 in den zugehörigen Ausnehmungen 31 wie Kugeln in Kugelpfannen wirken und eine Schwenkachse definieren. Bei dieser Schwenkbewegung gleitet die untere Leiste 41 in einer in Richtung auf die Einstecköffnung 26 gerichteten Bewegung, sozusagen von der Rückseite her, in die Rastnut 32. Dabei gleitet sie gegebenenfalls geringfügig auf der schräg verlaufenden unteren Fläche des Aufnahmeraums 25 und hebt eventuell die Modulbox 22 geringfügig an, bis die Leiste 41 in der Rastnut 32 Platz finden kann. Gegen Ende dieser Schwenkbewegung kommt die Rastklinke 42 mit der oberen Fläche 29 des Aufnahmeraums 25 in Berührung und drückt die Rastklinke 42 gegen die Wirkung einer Feder zurück. Unter der Wirkung der Vorspannfeder rastet die Rastklinke 42 in die obere Nut 33 ein, sobald die Modulbox 22 in der lagerichtigen Position liegt.

Die lagerichtige Position wird durch das Zusammenwirken der oberen Ausbuchtungen 48 mit den oberen Ausnehmungen 31 sichergestellt.

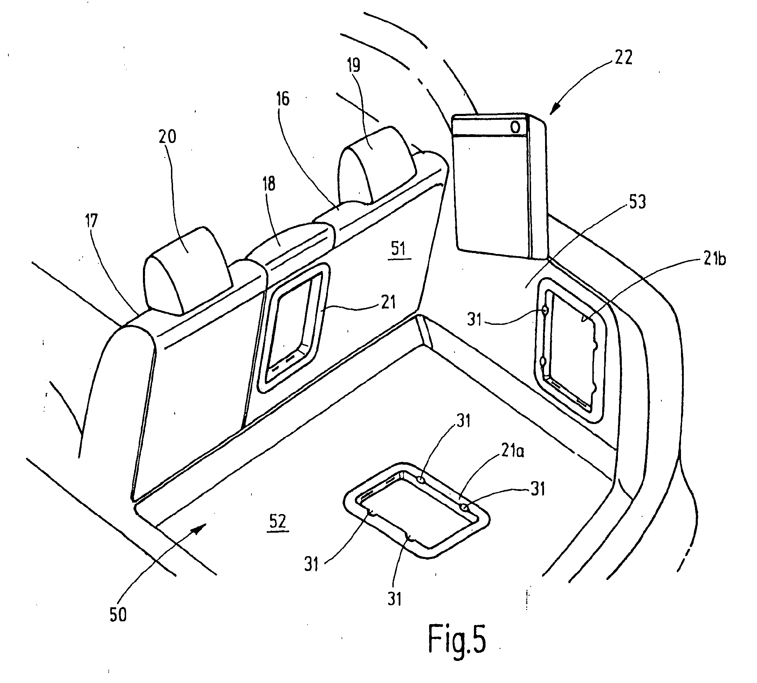

Fig. 5 zeigt das Fahrzeug aus Fig. 1 in einer Rückansicht mit gleichzeitiger Veranschaulichung von dessen Koffer- oder Laderaum 50. Es ist zu erkennen wie die ausführlich beschriebene Fassungsanordnung 21 in einer Rückwand 51, die die Tragstruktur für den Rückenlehneabschnitt 16 darstellt, enthalten ist.

Der Lade- oder Kofferraum 50 wird zusätzlich von einem Boden 52 sowie einer Seitenwand 53 begrenzt. Eine weitere Seitenwand, die zur gezeigten Seitenwand 53 spiegelbildlich ist, ist in der Darstellung weggeschnitten.

Wie hier zu erkennen ist, befindet sich auch im Boden 52 eine weitere Fassungsanordnung 21a. Somit ist es möglich, in der Fassungsanordnung 21 und/oder in der Fassungsanordnung 21a jeweils eine Funktionseinheit 22 bzw. Modulbox 22 unterzubringen. Die eine der beiden Modulboxen 22 kann beispielsweise eine Staubox zum unterbringen von losen Teilen sein, während die andere den bereits erwähnten Skisack enthält. Beim Verstauen von Skiern wird in die Fassungsanordnung 21 in der Rücksitzlehne 13 jene Modulbox 22 mit dem Skisack eingesetzt, während die Fassungsanordnung 21a in dem Boden 52 des Kofferraums die Modulbox mit Cupholder oder die Staubox aufnimmt.

Bei Nichtgebrauch der Modulbox 22 mit Skisack wird diese entnommen und in die Fassungsanordnung 21a eingesetzt, während die Modulbox mit dem Cupholder oder die Staubox in die Fassungsanordnung 21 zwischen den Rückenlehnen 16, 17 eingesetzt wird. Um dies zu ermöglichen sind die beiden Fassungsanordnungen 21 und 21a in ihrer Schnittstelle zu der Modulbox 22 zumindest soweit übereinstimmend, dass ein Einsetzen der Modulbox 22 möglich ist und, soweit erforderlich, auch die notwendigen Halterungen. Dies bedeutet beispielsweise, dass bei der Fassungsanordnung 21a in dem Boden 52 auf die Verrastung verzichtet werden kann. Es genügt, wenn dort die Fassungsanordnung 21a lediglich die vier segmentförmigen Ausnehmungen 31 enthält. Damit ist die lagerichtige Positionierung und Halterung ohne weiteres möglich. Die verbesserte Sicherung kann gegebenenfalls erreicht werden, wenn zusätzlich noch die Nut 32 für die Leise 41 enthalten ist.

Die Fassungsanordnung 21a kann unmittelbar in einer den Boden 52 bildenden Platte ausgebildet sein, oder als Einsatzstück, das in dem Boden 52 eingefügt ist.

Außerdem kann die Fassungsanordnung 21a über eine eigene Rückwand verfügen, die den Aufnahmeraum 25 nach unten verschließt.

Statt die zusätzliche Fassungsanordnung 21a in dem Boden 52 vorzusehen, kann sie auch beispielsweise als Fassungsanordnung 21b in der Seitenverkleidung 53 untergebracht sein. Auch hier ist wiederum die Schnittstelle zu dem Funktionseinsatz 22 mit der Schnittstelle an der Fassungsanordnung 21 insoweit übereinstimmend, dass eine ausreichende Aufnahme und Halterung gewährleistet ist. Gegebenenfalls sind die Schnittstellen identisch, d.h. es sind, wie bei der beschriebenen Ausführungsform sowohl die seitlichen Ausnehmungen 31 als auch die Nut 32 als auch die Nut 33 vorhanden. Das im Übrigen die Einstecköffnungen miteinander übereinstimmen und auch die Aufnahmeräume, ist selbstverständlich.

Zweckmäßigerweise ist die Fassungsanordnung 21b mit einer rückseitigen Wand versehen, damit bei entnommenem Funktionseinsatz 22 keine Teile ungewollt in den Raum zwischen der Innenverkleidung 23 und der Karosserieaußenhaut fallen können.

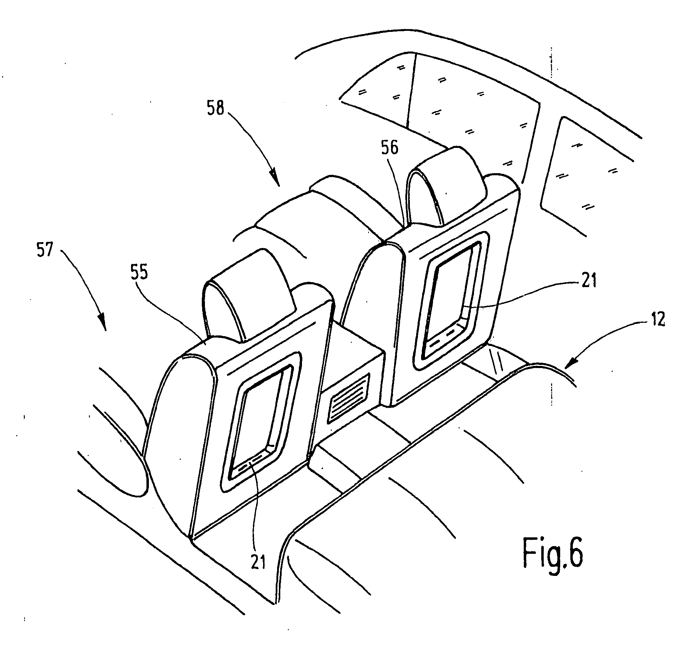

Fig. 6 zeigt die Möglichkeit die ausführlich erläuterten Fassungsanordnungen 21 in ähnlicher Form in der Rückseite von Rückenlehnen 55 und 56 eines Fahrersitzes 57 bzw. eines vorderen Beifahrersitzes 58 unterzubringen, wobei die Einstecköffnung 26 in der Ebene der Rückseite liegt.

Falls der Funktionseinsatz 22 elektrische Betriebsmittel enthält, können in einer der Wände, die den Aufnahmeraum 25 begrenzen, beispielsweise in der Seitenwand 28, elektrische Anschlusskontakte 59 und 60 enthalten sein, wie dies Fig. 2 zeigt.

Bei den bislang erläuterten Fassungsanordnungen 21 war aus Platzgründen die Gestaltung jeweils so gewählt, dass die Modulbox 22 über die Flachseite eingesetzt wird, wie dies beispielsweise in Fig. 5 schematisch angedeutet ist.

Abgesehen von dieser Art der Unterbringung ist es auch möglich, eine weitere Fassungsanordnung 21c zu verwenden, wie sie in Fig. 1 gestrichelt angedeutet ist. Hierbei ist die Fassungsanordnung 21c, wie gezeigt, schachtförmig unterhalb der Sitzfläche 12 in der Sockelfläche 14 ausgebildet. In dieser schachtförmigen Fassungsanordnung 21c, die endseitig verschlossen ist, wird die Modulbox 22 mit der betreffenden Schmalseite voraus, beispielsweise der Schmalseite 37, eingesteckt. Falls der zur Verfügung stehende Platz bis zur Rückseite des Vordersitzes nicht ausreicht, ist es auch denkbar, die schachtförmige Fassungsanordnung so zu gestalten, dass die Modulbox 22 mit ihrer langen Schmalseite 38 voraus eingesteckt wird. Die Einführöffnung der Fassungsanordnung 21c weist dementsprechend eine parallelogrammförmige Gestalt auf.

Unter schachtförmig soll hierbei verstanden sein, dass die Tiefe des Aufnahmeraums 25, der sich an die Einstecköffnung 26 anschließt, größer ist als die kürzeste Kante der Einstecköffnung 26 oder eine der Schmalseiten 36, 37, 38, 39 de Einstecköffnung 26 zugekehrt ist.

Die Unterbringung unter der Rücksitzbank 12 ist nur beispielhaft. Eine Unterbringung unter den Vordersitzen ist bei entsprechendem Freiraum auch denkbar.

Mit Hilfe von nicht gezeigten Abdeckklappen kann nach dem Einsetzen der Modulbox 22 die schachtförmige Fassungsanordnung 21c verschlossen werden.

Wie sich aus der Erläuterung unschwer ergibt, erfolgt das Einsetzen und Herausnehmen der Modulbox in allen Arten von Fassungsanordnungen 21 bzw aus diesen werkzeuglos.

Gegebenfalls ist es auch noch möglich, für nicht benötigte Fassungsanordnungen 21 einen Blinddeckel vorzusehen, um den Aufnahmeraum 25 zu verschließen, wenn keine Modulbox 22 eingesetzt ist.

Ein Kraftfahrzeug verfügt über zwei oder mehr Fassungsanordnungen in gleicher oder ähnlicher Konfiguration. Auf diese Weise ist es möglich, innerhalb dieses Fahrzeugs kastenförmige Funktionseinsätze oder Modulboxen wahlweise an unterschiedlichen Stellen unterzubringen. Dabei können einige Stellen Parkpositionen sein, um lediglich den Funktionseinsatz funktionslos innerhalb des Fahrzeugs aufzubewahren, während an anderen Stellen der Einsatz funktionsgemäß verstaubar ist.

## Patentansprüche

1. Kraftfahrzeug (1), insbesondere Personenkraftfahrzeug,
mit einer Karosserie, in der eine Innenverkleidung (53) enthalten ist, zu der ein Himmel gehört,
mit in der Karosserie vorhandenen Sitzen (11,57,58) für Personen,
mit wenigstens einer ersten Fassungsanordnung (21), die in dem Himmel angeordnet ist, die eine Schnittstelle zur Aufnahme und Halterung eines Funktionseinsatzes (22) sowie einen Aufnahmeraum (25) und eine viereckige oder zumindest angenähert rechteckige Einstecköffnung (26) für einen Funktionseinsatz (22) aufweist, und
mit wenigstens einer zweiten Fassungsanordnung (21), die eine Schnittstelle zur Aufnahme und Halterung eines Funktionseinsatzes (22) sowie einen Aufnahmeraum (25) und eine viereckige oder zumindest angenähert rechteckige Einstecköffnung (26) für einen Funktionseinsatz (22) aufweist,
wobei die Schnittstelle der zweiten Fassungsanordnung (21) mit der Schnittstelle der ersten Fassungsanordnung (21,21a) zumindest soweit übereinstimmt, dass ein und derselbe Funktionseinsatz (22) wahlweise in die eine oder die andere Fassungsanordnung (21) einsetzbar ist.

2. Kraftfahrzeug nach Anspruch 1, **dadurch gekennzeichnet, dass** der Aufnahmeraum (25) eine lichte Weite aufweist, die im Wesentlichen der lichten Weite der Einstecköffnung (26) entspricht.

3. Kraftfahrzeug nach Anspruch 1, **dadurch gekennzeichnet, dass** der Aufnahmeraum (25) auf der der Einstecköffnung (26) gegenüberliegenden Seite geschlossen ist.

4. Kraftfahrzeug nach Anspruch 1, **dadurch gekennzeichnet, dass** der Aufnahmeraum (25) auf der der Einstecköffnung (26) gegenüberliegenden Seite eine rückseitige Öffnung (27) aufweist.

5. Kraftfahrzeug nach Anspruch 1, **dadurch gekennzeichnet, dass** die rückseitige Öffnung (27) eine lichte Weite aufweist, die zumindest angenähert der lichten Weite des Aufnahmeraums (25) entspricht.

6. Kraftfahrzeug nach Anspruch 1, **dadurch gekennzeichnet, dass** die rückseitige Öffnung (27) im Wesentlichen dieselben Abmessungen aufweist wie die Einstecköffnung (26).

7. Kraftfahrzeug nach Anspruch 1, **dadurch gekennzeichnet, dass** zu den Sitzen (11,57,58) eine Rücksitzbank (11) mit Rücklehne (13) gehört und dass in der Rücksitzlehne (13) zumindest eine Fassungsanordnung (21) enthalten ist, die vorzugsweise einen Aufnahmeraum (25) aufweist, der an seiner Rückseite gegenüber der Einstecköffnung (26) mit einer Öffnung (27) versehen ist.

8. Kraftfahrzeug nach Anspruch 1, **dadurch gekennzeichnet, dass** zu den Sitzen (11,57,58) ein Fahrersitz (57) und gegebenenfalls ein Beifahrersitz (58) gehören, die jeweils eine Rückenlehne (55,56) mit einer Rückseite aufweisen, und dass in wenigstens einer der Rückenlehnen wenigstens eine Fassungsanordnung (21) enthalten ist, wobei die Einstecköffnung (26) in der Ebene der Rückseite der jeweiligen Rückenlehne (55,56) liegt.

9. Kraftfahrzeug nach Anspruch 1, **dadurch gekennzeichnet, dass** das Kraftfahrzeug (1) einen Koffer- oder Laderaum (50) aufweist, der zumindest teilweise mit einer Innenverkleidung (53) versehen ist, und dass in der Innenverkleidung (53) des Koffer- oder Laderaums (50), zumindest eine Fassungsanordnung (21) enthalten ist, deren Einstecköffnung (26) sich in Richtung auf das Innere des Koffer- oder Laderaums (50) öffnet.

10. Kraftfahrzeug nach Anspruch 1, **dadurch gekennzeichnet, dass** der Funktionseinsatz (22) in seinen Abmessungen mit den Abmessungen des Aufnahmeraums (25) übereinstimmt, derart, dass der Funktionseinsatz (22) nicht über die Einstecköffnung (26) nach außen übersteht.

11. Kraftfahrzeug nach Anspruch 1, **dadurch gekennzeichnet, dass** der Aufnahmeraum (25) der Fassungsanordnung (21) mit elektrischen Kontaktstellen (59,60) versehen ist.

12. Kraftfahrzeug nach Anspruch 1, **dadurch gekennzeichnet, dass** der Funktionseinsatz (22) Kontaktstellen aufweist, die mit den Kontaktstellen (59,60) der Fassungsanordnung (21) kompatibel sind.

13. Kraftfahrzeug nach Anspruch 1, **dadurch gekennzeichnet, dass** die Fassungsanordnung (21) schachtförmig ist.

14. Kraftfahrzeug nach Anspruch 1, **dadurch gekennzeichnet, dass** die Fassungsanordnung (21) mit Schwenkmitteln (31) versehen ist, die zu Schwenkmitteln (48) des Funktionseinsatzes (22) kompatibel, wobei die Schwenkmittel (31) der Fassungsanordnung (21) vorzugsweise zu deren Schnittstelle gehören.

15. Kraftfahrzeug nach Anspruch 1, **dadurch gekennzeichnet, dass** die Fassungsanordnung (21) mit Verriegelungsmitteln (32,33) versehen ist, die mit Verriegelungsmitteln (41,42) des Funktionseinsatzes (22) kompatibel sind, wobei vorzugsweise wenigstens ein Teil der Verriegelungsmittel (41,42) der Fassungsanordnung (21) zu deren Schnittstelle gehören.

16. Kraftfahrzeug nach Anspruch 1, **dadurch gekennzeichnet, dass** die Verriegelungsmittel (41,42) eine bewegliche Klinke (42) umfassen.

17. Kraftfahrzeug nach Anspruch 1, **dadurch gekennzeichnet, dass** der Funktionseinsatz (22) kastenförmig ist.

18. Kraftfahrzeug nach Anspruch 1, **dadurch gekennzeichnet, dass** der Funktionseinsatz (22) eine Funktionsbox ist.

19. Kraftfahrzeug nach Anspruch 1, **dadurch gekennzeichnet, dass** der Funktionseinsatz (22) einen Skisack aufweist.

## Claims

1. Motor vehicle (1), in particular an automobile,
with a body, in which an inside lining (53) is contained that includes a roof lining,
with seats (11, 57, 58) present in the body for passengers,
with at least a first mounting arrangement (21), which is arranged in the roof lining, which has an interface to receive and hold a function insert (22) as well as a receiving area (25) and a square or at least approximately rectangular insertion opening (26) for a function insert (22), and
with at least a second mounting arrangement (21), which has an interface to receive and hold a function insert (22) as well as a receiving area (25) and a square or at least approximately rectangular insertion opening (26) for a function insert (22),
wherein the interface of the second mounting arrangement (21) is the same as the interface of the first mounting arrangement (21, 2 1 a) at least in that one and the same function insert (22) can be selectively inserted into one or the other mounting arrangement (21).

2. Motor vehicle according to claim 1, **characterised in that** the receiving area (25) has an inside width, which substantially corresponds to the inside width of the insertion opening (26).

3. Motor vehicle according to claim 1, **characterised in that** the receiving area (25) is closed on the side opposite the insertion opening (26).

4. Motor vehicle according to claim 1, **characterised in that** the receiving area (25) has a rear opening (27) on the side opposite the insertion opening (26).

5. Motor vehicle according to claim 1, **characterised in that** the rear opening (27) has an inside width, which corresponds at least approximately to the inside width of the receiving space (25).

6. Motor vehicle according to claim 1, **characterised in that** the rear opening (27) has substantially the same dimensions as the insertion opening (26).

7. Motor vehicle according to claim 1, **characterised in that** the seats (11, 57, 58) include a rear seating arrangement (11) with a back rest (13), and that contained in the back rest (13) is at least one mounting arrangement (21), which preferably has a receiving area (25), which is provided with an opening (27) on its rear side opposite the insertion opening (26).

8. Motor vehicle according to claim 1, **characterised in that** the seats (11, 57, 58) include a driver's seat (57) and possibly a front passenger seat (58), which respectively have a back rest (55, 56) with a rear side, and that at least one mounting arrangement (21) is contained in at least one of the back rests, wherein the insertion opening (26) lies in the plane of the rear side of the respective back rest (55, 56).

9. Motor vehicle according to claim 1, **characterised in that** the motor vehicle (1) has a luggage or cargo area (50), which is provided at least partially with an inside lining (53), and that the inside lining (53) of the luggage or cargo area (50) contains at least one mounting arrangement (21), the insertion opening (26) of which opens towards the interior of the luggage or cargo area (50).

10. Motor vehicle according to claim 1, **characterised in that** the dimensions of the function insert (22) are the same as the dimensions of the receiving area (25) such that the function insert (22) does not project outwards beyond the insertion opening (26).

11. Motor vehicle according to claim 1, **characterised in that** the receiving area (25) of the mounting arrangement (21) is provided with electrical connection points (59, 60).

12. Motor vehicle according to claim 1, **characterised in that** the function insert (22) has connection points that are compatible with the connection points (59, 60) of the mounting arrangement (21).

13. Motor vehicle according to claim 1, **characterised in that** the mounting arrangement (21) is in the shape of a shaft.

14. Motor vehicle according to claim 1, **characterised in that** the mounting arrangement (21) is provided with pivoting elements (31), which are compatible with pivoting elements z(48) of the function insert (22), wherein the pivoting elements (31) of the mounting arrangement (21) preferably belong to the interface thereof.

15. Motor vehicle according to claim 1, **characterised in that** the mounting arrangement (21) is provided with locking elements (32, 33), which are compatible with locking elements (41, 42) of the function insert (22), wherein preferably at least some of the locking elements (41, 42) of the mounting arrangement (21) belong to the interface thereof.

16. Motor vehicle according to claim 1, **characterised in that** the locking elements (41, 42) comprise a movable catch (42).

17. Motor vehicle according to claim 1, **characterised in that** the function insert (22) is in the shape, of a box.

18. Motor vehicle according to claim 1, **characterised in that** the function insert (22) is a function box.

19. Motor vehicle according to claim 1, **characterised in that** the function insert (22) is a ski bag.

## Revendications

1. Véhicule automobile (1), notamment voiture particulière,
comprenant une carrosserie avec un habillage intérieur (53) qui comporte un habillage de plafond,
comprenant des sièges (11, 57, 58) pour des personnes dans la carrosserie,
comprenant au moins un premier dispositif de support (21) qui est installé dans l'habillage de plafond et qui présente une interface, pour recevoir et fixer un insert fonctionnel (22), ainsi qu'un espace récepteur (25) et une ouverture d'insertion (26) quadrangulaire ou au moins approximativement rectangulaire pour un insert fonctionnel (22), et
comprenant au moins un deuxième dispositif de support (21) qui présente une interface, pour recevoir et fixer un insert fonctionnel (22), ainsi qu'un espace récepteur (25) et une ouverture d'insertion (26) quadrangulaire ou au moins approximativement rectangulaire pour un insert fonctionnel (22),
l'interface du deuxième dispositif de support (21) coïncidant avec l'interface du premier dispositif de support (21, 21a) au moins dans une mesure telle qu'un même insert fonctionnel (22) puisse être engagé au choix dans l'un ou l'autre dispositif de support (21).

2. Véhicule selon la revendication 1, **caractérisé en ce que** l'espace récepteur (25) présente une largeur intérieure qui correspond sensiblement à la largeur intérieure de l'ouverture d'insertion (26).

3. Véhicule selon la revendication 1, **caractérisé en ce que** l'espace récepteur (25) est fermé sur le côté opposé à l'ouverture d'insertion (26).

4. Véhicule selon la revendication 1, **caractérisé en ce que** l'espace récepteur (25) présente une ouverture arrière (27) sur le côté opposé à l'ouverture d'insertion (26).

5. Véhicule selon la revendication 1, **caractérisé en ce que** l'ouverture arrière (27) présente une largeur intérieure qui correspond au moins approximativement à la largeur intérieure de l'espace récepteur (25).

6. Véhicule selon la revendication 1, **caractérisé en ce que** l'ouverture arrière (27) présente sensiblement les mêmes dimensions que l'ouverture d'insertion (26).

7. Véhicule selon la revendication 1, **caractérisé en ce que** les sièges (11, 57, 58) comprennent une banquette arrière (11) avec un dossier (13), et **en ce que** le dossier de siège arrière (13) comporte au moins un dispositif de support (21) qui présente de préférence un espace récepteur (25), lequel est muni, sur sa face arrière, d'une ouverture (27) située en vis-à-vis de l'ouverture d'insertion (26).

8. Véhicule selon la revendication 1, **caractérisé en ce que** les sièges (11, 57, 58) comprennent un siège de conducteur (57) et, le cas échéant, un siège de passager (58) qui présentent chacun un dossier (55, 56) avec une face arrière, et **en ce qu'**au moins un des dossiers contient au moins un dispositif de support (21), l'ouverture d'insertion (26) se situant dans le plan de la face arrière du dossier (55, 56) respectif.

9. Véhicule selon la revendication 1, **caractérisé en ce que** le véhicule (1) présente un espace à bagages (50) qui est pourvu au moins en partie d'un habillage intérieur (53), et **en ce que** l'habillage intérieur (53) de l'espace à bagages (50) comporte au moins un dispositif de support (21) dont l'ouverture d'insertion (26) s'ouvre en direction de l'intérieur de l'espace à bagages (50).

10. Véhicule selon la revendication 1, **caractérisé en ce que** les dimensions de l'insert fonctionnel (22) correspondent aux dimensions de l'espace récepteur (25) de manière telle que l'insert fonctionnel (22) ne dépasse pas vers l'extérieur par rapport à l'ouverture d'insertion (26).

11. Véhicule selon la revendication 1, **caractérisé en ce que** l'espace récepteur (25) du dispositif de support (21) est pourvu de contacts électriques (59, 60).

12. Véhicule selon la revendication 1, **caractérisé en ce que** l'insert fonctionnel (22) présente des contacts qui sont compatibles avec les contacts (59, 60) du dispositif de support (21).

13. Véhicule selon la revendication 1, **caractérisé en ce que** le dispositif de support (21) a une forme de conduit.

14. Véhicule selon la revendication 1, **caractérisé en ce que** le dispositif de support (21) est pourvu de moyens de pivotement (31) qui sont compatibles avec des moyens de pivotement (48) de l'insert fonctionnel (22), les moyens de pivotement (31) du dispositif de support (21) faisant de préférence partie de l'interface de celui-ci.

15. Véhicule selon la revendication 1, **caractérisé en ce que** le dispositif de support (21) est pourvu de moyens de verrouillage (32, 33) qui sont compatibles avec des moyens de verrouillage (41, 42) de l'insert fonctionnel (22), au moins une partie des moyens de verrouillage (41, 42) du dispositif de support (21) faisant partie de l'interface de celui-ci.

16. Véhicule selon la revendication 1, **caractérisé en ce que** les moyens de verrouillage (41, 42) comprennent un cliquet (42) mobile.

17. Véhicule selon la revendication 1, **caractérisé en ce que** l'insert fonctionnel (22) se présente sous forme de caisson.

18. Véhicule selon la revendication 1, **caractérisé en ce que** l'insert fonctionnel (22) est une boîte fonctionnelle.

19. Véhicule selon la revendication 1, **caractérisé en ce que** l'insert fonctionnel (22) présente un sac à skis.
